(19) Europäisches Patentamt
European Patent Office
Office européen des brevets

(11) **EP 4 656 512 A1**

(12) **EUROPEAN PATENT APPLICATION**

(43) Date of publication:
**03.12.2025   Bulletin 2025/49**

(21) Application number: **24178943.7**

(22) Date of filing: **29.05.2024**

(51) International Patent Classification (IPC):
**B64C 1/06** *(2006.01)*        **B64C 1/08** *(2006.01)*
**F17C 1/00** *(2006.01)*        **B64D 37/04** *(2006.01)*
**B64D 37/30** *(2006.01)*

(52) Cooperative Patent Classification (CPC):
**B64C 1/068; B64C 1/061; B64C 1/08;**
**F17C 13/084;** B64D 37/04; B64D 37/30;
F17C 2201/0109; F17C 2221/012; F17C 2270/0189

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **AIRBUS Operations GmbH**
**21129 Hamburg (DE)**

(72) Inventors:
• **Siemann, Martin**
  **Hamburg (DE)**
• **Leichsner, Florian**
  **Hamburg (DE)**

(54) **AIRCRAFT FUSELAGE AND AIRCRAFT OR SPACECRAFT**

(57)    The present invention provides an aircraft fuselage (10) comprising: a first fuselage section (11) having a first reinforcement structure (12); a second fuselage section (13), which is arranged next to the first fuselage section (11) in a longitudinal direction (X) of the aircraft fuselage (10), wherein the second fuselage section (13) comprises a second reinforcement structure (14) that is configured differently to the first reinforcement structure (12). Further, the present invention provides an aircraft (1) or spacecraft comprising such an aircraft fuselage (10) and at least one substantially cylindrically shaped tank (2) which is arranged inside the second fuselage section (13).

Fig. 1

**Description**

The invention relates to an aircraft fuselage. The invention is furthermore concerned with an aircraft or spacecraft, in particular a passenger aircraft, containing such an aircraft fuselage.

In order to significantly lower emissions, next generation aircraft may be powered by hydrogen. Hydrogen can be stored in its liquid state in hydrogen tanks, which may be installed in an unpressurized aft fuselage (i.e. caudal tandem configuration) and which typically have a cylindrical shape with hemispherical, ellipsoidal or torispherical caps. This is the most intuitive configuration as the typical shape of the tanks fits best into the typical shape of the aircraft fuselage which is cylindrically shaped.

In conventional fuselage structures of commercial transport aircraft, the fuselage is reinforced based on an orthogonal grid pattern with stringers, frames, and skin (also known as semi-monocoque), where a height of the frames would define the space for the tank.

In the prior art, only fuselage structures varying its structure type around the circumference are known. For example, document GB 2 443 542 A describes a fuselage structure including an upper fuselage portion defined by a first cross-section. The fuselage structure also includes a lower fuselage portion defined by a second cross-section, wherein the first cross-section is different from the second cross-section.

In hydrogen-powered aircrafts, the hydrogen tanks are typically stored in the aft fuselage. The hydrogen tanks need a certain stroke in order to absorb their kinetic energy in a potential crash scenario. At the same time, the hydrogen tanks shall be as large as possible with respect to the cross-section to make maximum use of the given space, i. e. not extending the fuselage length otherwise.

According to the invention, this problem is solved in each case by the subject matters of the independent claims.

According to a first aspect of the invention, an aircraft fuselage is provided. The aircraft fuselage comprises a first fuselage section having a first reinforcement structure, and a second fuselage section. The second fuselage section is arranged next to the first fuselage section in a longitudinal direction of the aircraft fuselage. The second fuselage section comprises a second reinforcement structure that is configured differently to the first reinforcement structure.

According to a second aspect of the invention, an aircraft or spacecraft, in particular a passenger aircraft, is provided. The aircraft or spacecraft comprises an aircraft fuselage according to the first aspect of the invention and at least one substantially cylindrically shaped tank. The tank is arranged inside the second fuselage section.

A fundamental concept of the invention is to provide an improved aircraft fuselage with a combination of different types of structural reinforcement concepts. Therefore, the second reinforcement structure is used in the second fuselage section in order to have an identical height of reinforcement profiles, allowing for a larger tank diameter. At the same time, the first reinforcement structure can remain as in conventional fuselage structures, for example based on an orthogonal grid pattern. For example, in some scenarios, an impact originating from an undesired contact with the ground surface may be at least partially absorbed by the second fuselage section. The second fuselage section can be configured to absorb kinetic energy by a plastic deformation and/or by progressive structural failure. In particular, the second fuselage section can be configured to absorb impact energy in a potential crash scenario.

The longitudinal direction substantially corresponds to a flight direction of the aircraft or spacecraft. Furthermore, the aircraft fuselage may comprise a transverse direction and a vertical direction. For example, the aircraft can be configured as a hydrogen-powered aircraft. In hydrogen-powered aircraft configurations with a caudal tandem tank configuration, the second fuselage section can be configured to fit a hydrogen tank into the aft fuselage.

The first fuselage section can be attached to the second fuselage section. The second fuselage section can correspond to an aft fuselage of the aircraft fuselage.

A particular advantage in the solution according to an aspect of the invention is that a height of the second reinforcement structure can be reduced. Therefore, it allows for larger tank diameter and thus less fuselage length. That means a tank volume per fuselage length unit can be maximized. Additionally, this provides at least one benefit for an overall aircraft design. For example, such a benefit could be a shorter fuselage length, a lower fuselage mass, a more forward center of gravity of the aircraft, a lower landing gear height and/or a more forward landing gear location.

In the meaning of this invention, the height of the second reinforcement structure corresponds to a height of the second reinforcement structure with respect to the fuselage skin and it is facing toward the interior of the fuselage, in particular considering a cross-section thereof.

Assuming a constant tank volume, there is a nonlinear relation between the change of a tank diameter and the resulting fuselage length. This can easily be explained when considering a simplified tank geometry such as a cylinder, whose volume is proportional to the square of its diameter (quadratic relationship) and to its length (linear relationship). Therefore, when reducing the tank diameter by a factor of 1.2, for example, the length must increase by a factor of $1.2^2 = 1.44$.

At the same time, a stroke length below the tank required to absorb its kinetic energy while not exceeding a predefined acceleration limit is mainly depending on an initial vertical impact velocity and a limit of acceleration sustained by the tank. The stroke length below the tank corresponds to a distance which the tank moves while absorbing its kinetic energy. The kinetic energy $E_{kin}$ of a predetermined section, for example a section comprising the hydrogen tank, of the aircraft fuselage needs to be absorbed, which is expressed mathematically by:

$$E_{kin} = E_{abs}$$

$$0.5 \, m \cdot v_0^2 = F \cdot s$$

with

$F = m \cdot n \cdot g$, according to Newton's law of motion, wherein the absorbed impact energy $E_{abs}$ is expressed for an idealized energy absorber, that means an integral of a force-displacement curve simplified as a rectangle formed by mean force F and stroke length s.

From this relationship and the equation defining Newton's law of motion, the equation can be calculated to:

$$0.5 \, m \cdot v_0^2 = m \cdot n \cdot g \cdot s$$

$$0.5 \quad \cdot v_0^2 = \quad \cdot n \cdot g \cdot s.$$

In the above equations, $E_{kin}$ is the kinetic energy, $E_{abs}$ is the absorbed impact energy, m is the mass of the predetermined section of the aircraft fuselage, $v_0$ is the initial vertical impact velocity, n is the load multiple and s is the required stroke length for above mentioned energy absorption.

Accordingly and considering the above mentioned simplification respectively idealization, an equation for the required stroke length s for energy absorption can be obtained:

$$s = v_0^2 / (2 \cdot n \cdot g).$$

Thus, the required stroke length s for energy absorption is a function of the impact velocity $v_0$ and the load multiple n but not of the mass m.

As a result, the stroke length respectively the free length required below the tank remains unchanged when changing the tank geometry, such as its diameter, and assuming a constant tank volume and thus a constant mass. Therefore, any reduction of the height of the fuselage reinforcement structure, for example of the second reinforcement structure, permits an increase of the tank diameter. Advantageously, this can result in a disproportionate, progressive reduction of the fuselage length. In turn, this can provide benefits such as an overall weight reduction of the aircraft.

Another advantage is that the second reinforcement structure according to the invention improves an overall crash behavior of the second fuselage section.

The structural behavior of the second fuselage section can be improved during a potential, undesired crash scenario when equipped with the second reinforcement structure.

Furthermore, benefits of respective design types in areas of the aircraft fuselage with very different requirements, e. g. pressurized compartments with windows/doors/floor cross-beams in contrast to unpressurized compartments without windows/doors/floor cross-beams, can be used.

Advantageous embodiments and further developments emerge from the description with reference to the figures.

According to some embodiments of the invention, the second reinforcement structure comprises a grid-stiffened panel structure. Hence, the grid-stiffened panel structure can provide damage tolerance capabilities. The grid-stiffened panel structure can comprise first ribs forming a first grid-stiffened panel and second ribs forming a second grid-stiffened panel. For example, the grid-stiffened panel structure can be configured as an isogrid structure or an anglegrid structure.

According to some further embodiments of the invention, the second reinforcement structure comprises a monocoque structure. The monocoque structure can comprise a primary structure that forms a shell (or skin in an aircraft's case) and supports physical loads. Monocoque fuselages are fuselages in which the aircraft skin or shell is also the primary structure. In the monocoque structure the aircraft skin would support tensile and compressive loads within itself. The aircraft skin in this construction method can be rigid and can sustain its shape with no structural assistance form underlying skeleton-like elements. The aircraft skin can be made from a composite like plywood layered in varying grain directions, epoxy-impregnated fiberglass or carbon fiber, or from a monolithic material or any combination thereof.

According to some further embodiments of the invention, the monocoque structure is configured as a sandwich structure, which comprises metallic and/or composite cover sheets and a truss-core, a honeycomb-core or a patterned woven basket core. For example, the composite cover sheets can include a carbon fiber reinforced and/or a glass fiber reinforced material. Moreover, the honeycomb-core can be made of paper or metal, such as aluminum.

Alternatively, the sandwich structure can comprise fiber reinforced plastic sheets and a honeycomb-core. A truss-core can comprise welded steel tube trusses, for example. A truss, as used in this disclosure, is an assembly of beams that create a rigid or stiff structure, often in combinations of triangles to create three-dimensional shapes. A truss-core may alternatively comprise wood construction in place of steel tubes, or a combination thereof. An aircraft skin may be layered over the sandwich structure constructed by the truss-core. The aircraft skin may comprise a plurality of materials such as plywood sheets, aluminum, fiberglass, and/or carbon fiber.

According to some further embodiments of the invention, the second reinforcement structure comprises a geodetic structure with an isogrid-type structure that is made of piecewise linear segments. Hence, an outer surface of the second fuselage section can be kept as is, that means geodetic shape, since a boundary layer has a certain thickness so far aft on the aircraft fuselage that it may not significantly reduce its aerodynamic properties. On the other hand, the geodetic structure could be covered by aerodynamic cover sheets in order to improve the aerodynamic smootheness if necessary.

Optionally, the geodetic structure can include stringers wound about formers (which may be alternatively called station frames) in opposing spiral directions. A stringer, for the purposes of the geodetic structure is a general structural element that comprises a long, thin, and rigid strip of metal or wood that is mechanically coupled to and spans the distance from, station frame to station frame to create an internal skeleton on which to mechanically couple an aircraft skin. A former (or station frame) can include a rigid or stiff structural element that is disposed along the length of the interior of at least a fuselage component orthogonal to the longitudinal direction of the aircraft fuselage and can form the general shape of the second fuselage section. A former may comprise differing cross-sectional shapes at differing locations along the second fuselage section, as the former is the structural element that informs the overall shape of a curvature of the second fuselage section.

In some embodiments, the aircraft skin can be anchored to formers and stringers such that the outer mold line of the volume encapsulated by the formers and stringers comprises the same shape as aircraft when installed. In other words, former(s) may form a fuselage's ribs, and the stringers may form the interstitials between such ribs. A spiral orientation of the stringers about formers provide uniform robustness at any point on the aircraft fuselage such that if a portion sustains damage, another portion may remain largely unaffected. The aircraft skin can be mechanically coupled to underlying stringers and formers and may interact with a fluid, such as air, to generate lift and perform maneuvers.

According to some further embodiments of the invention, the second fuselage section comprises an interior cavity. For example, the interior cavity can have an interior width in a transverse direction of the aircraft fuselage with substantially the same dimension as an interior height in a vertical direction has. In particular, the interior height is a little larger in the vertical direction compared to the interior width in the transverse direction as this can provide the needed stroke length for crash energy absorption. The interior cavity can be formed and/or configured to receive at least one substantially cylindrically shaped tank, for example at least one hydrogen tank.

According to some further embodiments of the invention, a height of the second reinforcement structure varies along the longitudinal direction or along the circumferential direction or along both the longitudinal direction and a circumferential direction of the aircraft fuselage. The height respectively thickness of the second reinforcement structure could be configured to be locally quasi-uniform in order to maximize space for a hydrogen tank. Furthermore, the height can be adopted to respective local loading conditions. Additional space can be provided inside the second fuselage section, in particular in a cross-section of the second fuselage section, while withstanding local loads.

According to some further embodiments of the invention, the height increases and decreases once or twice per circulation in the circumferential direction when starting at a predetermined position on the circumference. Thus, the interior cavity can be adapted in its cross-sectional shape corresponding to a plane span by the vertical direction and the transverse direction. The predetermined position can be a top position or a bottom position of the second fuselage section, for example.

According to some further embodiments of the invention, the second fuselage section comprises at least one minor frame and at least one major frame for attaching a hydrogen tank to the second fuselage section, wherein the at least one major frame extends in the circumferential direction and is thicker and is configured stronger than the at least one minor frame. For example, the at least one major frame can have larger dimensions and/or different cross-section profile to be configured stronger than the at least one minor frame.

According to some further embodiments of the invention, the at least one major frame comprises a first major frame and a second major frame spaced apart from the first major frame, wherein the at least one minor frame is arranged between the first and the second major frame. The at least one minor frame can be configured as a grid stiffened structure. Hence, a thickness or height, respectively, of the second reinforcement structure can be reduced at an area, where a hydrogen tank is stored.

According to some further embodiments of the invention, the first reinforcement structure comprises a plurality of frames, which extend along a circumferential direction of the aircraft fuselage, and a plurality of stringers, which extend along the longitudinal direction. Thus, the plurality of frames and the plurality of stringers are arranged perpendicular to each other. The first reinforcement structure can be based on an orthogonal grid pattern with the plurality of stringers, the plurality of frames, and an aircraft skin, for example, also known as semi-monocoque construction.

According to some further embodiments of the invention, the first fuselage section circumferentially encloses a pressurizable compartment, which is pressurizable with an internal pressure, and wherein the second fuselage section circumferentially encloses an unpressurized compartment, which comprises an ambient pressure that is lower than the internal pressure. The pressurizable compartment can be configured as a passenger cabin. The unpressurized compartment can be configured as a tank compartment. The aircraft fuselage can further comprise a pressure bulkhead device that separates the pressurizable compartment from the unpressurized compartment.

According to some further embodiments of the invention, the first major frame is arranged forward of the at least one substantially cylindrically shaped tank and the second major frame is arranged aft of the at least one substantially cylindrically shaped tank, wherein the first and the second major frame are both configured to attach the at least one substantially cylindrically shaped tank. For example, the first and the second major frame are arranged at each of both end portions of the at least one substantially cylindrically shaped tank, wherein the both end portions are dome-like shaped. Hence, at both end portions there can be a larger vertical space toward the at least one major frame.

The present invention is explained more specifically below on the basis of the exemplary embodiments indicated in the schematic figures, in which:

Fig. 1    shows a schematic illustration of an aircraft comprising an aircraft fuselage according to an embodiment of the invention;

Fig. 2    shows a schematic illustration in a side view of a longitudinal cut section of an aircraft fuselage according to a further embodiment of the invention comprising a hydrogen tank compartment;

Fig. 3    shows a schematic cross-sectional view of the aircraft fuselage of Fig. 2 according to a further embodiment of the invention;

Fig. 4    shows a schematic cross-sectional view of the aircraft fuselage of Fig. 2 according to a further embodiment of the invention, wherein a height of the second reinforcement structure increases and decreases twice per circulation in the circumferential direction when starting at a predetermined position on the circumference;

Fig. 5    shows a schematic cross-sectional view of the aircraft fuselage of Fig. 2 according to a further embodiment of the invention, wherein a height of the second reinforcement structure increases and decreases once per circulation in the circumferential direction when starting at a predetermined position on the circumference; and

Fig. 6    shows a schematic perspective view of a second fuselage section of an aircraft fuselage according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

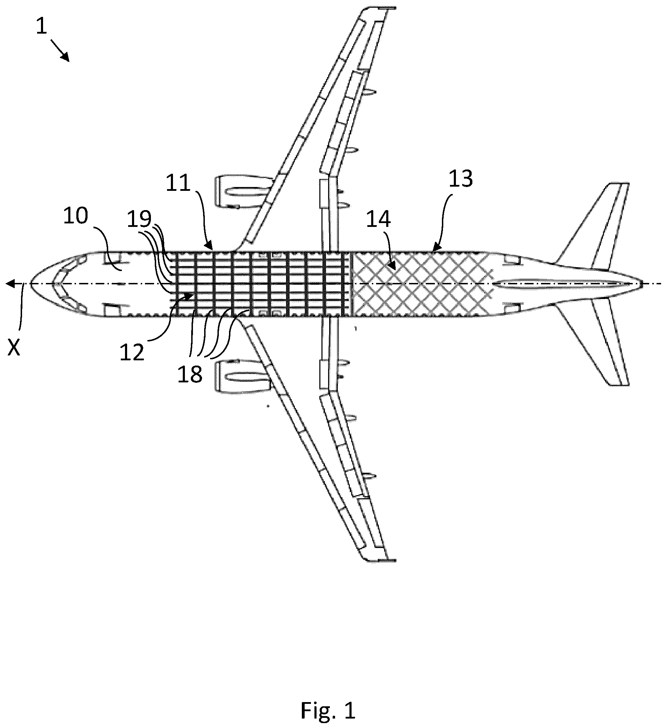

Fig. 1 shows a schematic illustration of an aircraft 1 comprising an aircraft fuselage 10 according to an embodiment of the invention.

The aircraft 1 comprises the aircraft fuselage 10 and at least one substantially cylindrically shaped tank which is arranged inside the second fuselage section 13. The aircraft fuselage 10 comprises a longitudinal direction X, which substantially corresponds to a flight direction of the aircraft 1.

The aircraft fuselage 10 comprises a first fuselage section 11 having a first reinforcement structure 12 and a second fuselage section 13 having a second reinforcement structure 14. The second reinforcement structure 14 is arranged next to the first fuselage section 11 in the longitudinal direction X of the aircraft fuselage 10. The second reinforcement structure 14 is configured differently to the first reinforcement structure 12.

Here, the first fuselage section 11 is exemplarily configured as a pressurizable compartment, which is pressurizable with an internal pressure, and the second fuselage section 13 is exemplarily configured as an unpressurized compartment 12, which comprises an ambient pressure that is lower than the internal pressure.

For example, the first reinforcement structure 12 can comprise a plurality of frames 18, which extend along a circumferential direction U of the aircraft fuselage 10, and a plurality of stringers 19, which extend along the longitudinal direction X. Thus, the plurality of frames 18 and the plurality of stringers 19 are arranged perpendicular to each other. The first reinforcement structure 12 can be based on an orthogonal grid pattern, as it is illustrated in Fig. 1, with the plurality of stringers 19, the plurality of frames 18, and an aircraft skin, for example, also known as semi-monocoque construction.

Exemplarily, the second reinforcement structure 14 can comprise a grid-stiffened panel structure. For example, the grid-stiffened panel structure can be configured as an isogrid structure or an anglegrid structure, as it is illustrated in Fig. 1.

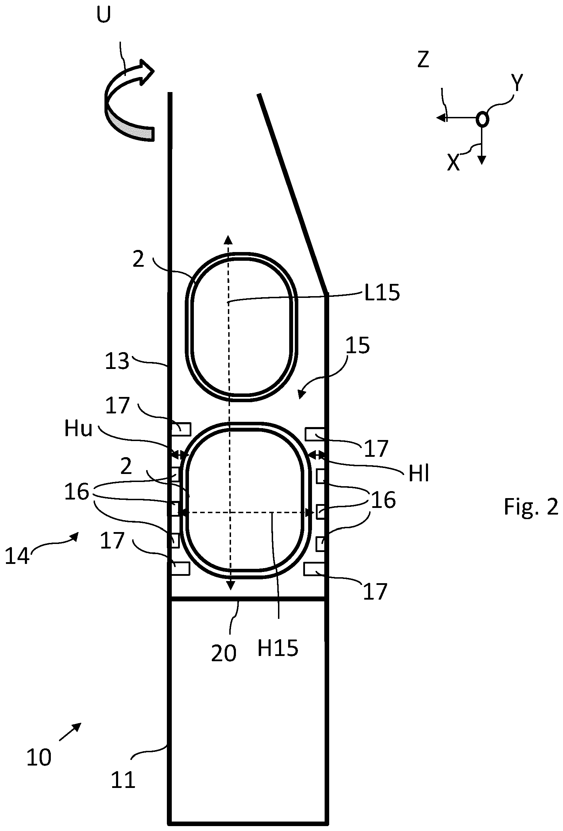

Fig. 2 shows a schematic illustration in a side view of a longitudinal cut section of an aircraft fuselage 10 according to a further embodiment of the invention comprising a hydrogen tank compartment.

The aircraft fuselage 10 comprises a first fuselage section 11 having a first reinforcement structure 12 and a second fuselage section 13 having a second reinforcement structure 14. The second reinforcement structure 14 is arranged next to the first fuselage section 11 in the longitudinal direction X of the aircraft fuselage 10. The second reinforcement structure 14 is configured differently to the first reinforcement structure 12. Furthermore, the aircraft fuselage 10 comprises a transverse direction Y and a vertical direction Z.

The first fuselage section 11 can be attached to the second fuselage section 13. The second fuselage section 13 can correspond to an aft fuselage of the aircraft fuselage 10. The aircraft fuselage 10 can further comprise a pressure bulkhead 20, which separates the first fuselage section 11 from the second fuselage section 13. The second fuselage section 13 is exemplarily configured as a hydrogen tank compartment. The hydrogen tank compartment 13 can comprise at least one substantially cylindrically shaped tank 2 which can be arranged inside the hydrogen tank compartment 13. The at least one substantially cylindrically shaped tank 2 can be configured as a hydrogen tank.

For example, the aircraft fuselage 10 can be configured and used for a hydrogen-powered aircraft. Therefore, the hydrogen tank compartment 12 can carry at least one hydrogen tank 14. The at least one hydrogen tank 14 can each be carried by a structure 15.

The second reinforcement structure 14 may comprise a grid-stiffened panel structure, a monocoque structure or a geodetic structure with an isogrid-type structure that is made of piecewise linear segments, but is not limited to those structures. For example, the monocoque structure can be configured as a sandwich structure, which comprises metallic or composite cover sheets and a truss-core, a honeycomb-core or a patterned woven basket core.

The second fuselage section 13 can further comprise an interior cavity 15. For example, the interior cavity 15 can have an interior width W15 in the transverse direction Y of the aircraft fuselage 10 with the same dimension as the interior height H15 has.

Alternatively or additionally, the interior cavity 15 has an interior length L15 in the longitudinal direction. The interior cavity 15 can be formed and/or configured to receive the at least one substantially cylindrically shaped tank 2, for example two hydrogen tanks.

In Fig. 2, the second fuselage section 13 exemplarily comprises at least one minor frame 16 and at least one major frame 17 for attaching a hydrogen tank 2 to the second fuselage section 13, wherein the at least one major frame 17 extends in the circumferential direction U and is thicker and is configured stronger than the at least one minor frame 16. For example, the at least one major frame 17 can have larger dimensions and/or different cross-section profile to be configured stronger than the at least one minor frame 16. The at least one major frame 17 comprises a first major frame 17 and a second major frame 17 spaced apart from the first major frame, wherein the at least one minor frame 16 are arranged between the first and the second major frame 17. Hence, a thickness or height h, respectively, of the second reinforcement structure 14 can be reduced at an area, where the hydrogen tank 2 is stored.

The first major frame 17 is arranged forward of the at least one substantially cylindrically shaped tank 2 and the second major frame 17 is arranged aft of the at least one substantially cylindrically shaped tank 2, wherein the first and the second major frame 17 are both configured to attach the at least one substantially cylindrically shaped tank 2. For example, the first and the second major frame are arranged at each of both end portions of the at least one substantially cylindrically shaped tank, wherein the both end portions are dome-like shaped. Hence, at the both end portions can be a larger vertical space toward the at least one major frame 17. That means a height Hu above the hydrogen tank 2 and a height Hl below the hydrogen tank 2 are larger at both end portions.

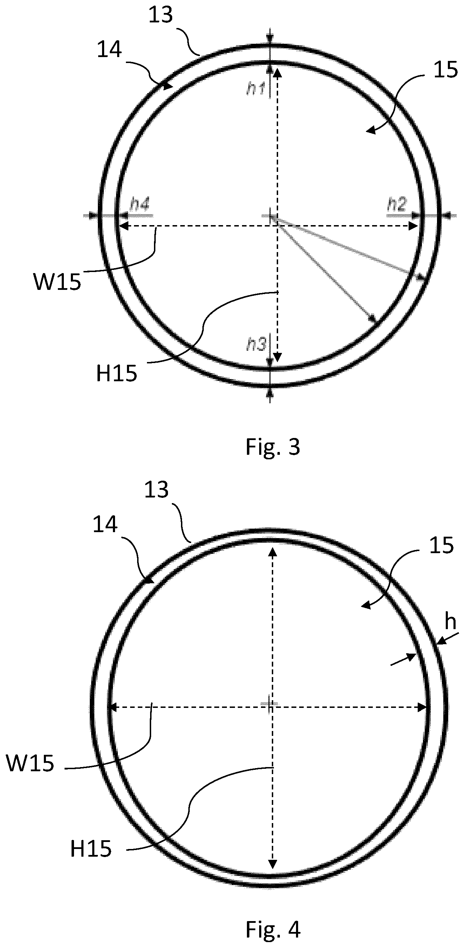

Fig. 3 shows a schematic cross-sectional view of the aircraft fuselage 10 of Fig. 2 according to a further embodiment of the invention. Specifically, Fig. 3 shows a height of the second reinforcement structure at four different positions.

Exemplarily, h1 represents the height of the second reinforcement structure 14 at the top of the aircraft fuselage 10. The reference signs h2 and h4 each represent the height of the second reinforcement structure 14 at a lateral side of the aircraft fuselage. Furthermore, h3 represents the height of the second reinforcement structure 14 at the bottom of the aircraft fuselage 10.

Fig. 4 shows a schematic cross-sectional view of the aircraft fuselage 10 of Fig. 2 according to a further embodiment of the invention, wherein a height h of the second reinforcement structure 14 increases and decreases twice per circulation in the circumferential direction U when starting at a predetermined position on the circumference. The predetermined position can be a top or a bottom of the aircraft fuselage 10.

Exemplarily, a height h of the second reinforcement structure 14 varies along the circumferential direction U. The height h of the second reinforcement structure 14 could be configured to be locally quasi-uniform in order to maximize space for a hydrogen tank. Furthermore, the height h can be adopted to respective local loading conditions. Additional space can be provided inside the second fuselage section 13, in particular in a cross-section of the second fuselage section 13, while withstanding local loads. In particular, the height h increases and decreases twice per circulation in the circumferential direction U when starting at the top on the circumference, for example. Thus, the interior cavity 15 can be adapted in its cross-sectional shape corresponding to a plane span by the vertical direction Z and the transverse direction Y. The predetermined position can be a top position or a bottom position of the second fuselage section 13, for example.

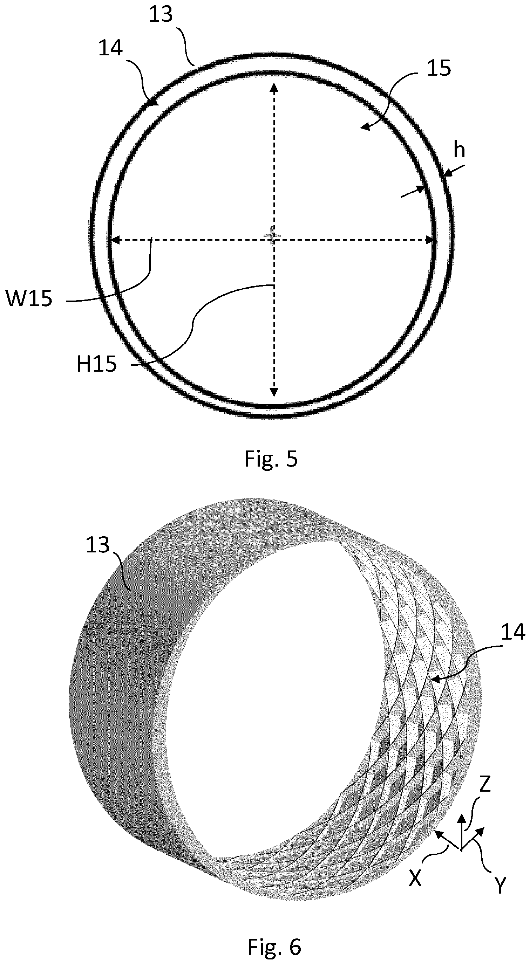

Fig. 5 shows a schematic cross-sectional view of the aircraft fuselage 10 of Fig. 2 according to a further embodiment of the invention, wherein a height h of the second reinforcement structure 14 increases and decreases once per circulation in the circumferential direction U when starting at a predetermined position on the circumference. The predetermined position can be a top or a bottom of the aircraft fuselage 10.

Exemplarily, a height h of the second reinforcement structure 14 varies along the circumferential direction U. The height h of the second reinforcement structure 14 could be configured to be locally quasi-uniform in order to maximize space for a hydrogen tank. Furthermore, the height h can be adopted to respective loading. Additional space can be provided inside the second fuselage section 13, in particular in a cross-section of the second fuselage section 13, while withstanding local loads. In particular, the height h increases and decreases once per circulation in the circumferential direction U when starting at the top on the circumference, for example. Thus, the interior cavity 15 can be adapted in its cross-sectional shape corresponding to a plane span by the vertical direction Z and the transverse direction Y. The predetermined position can be a top position or a bottom position of the second fuselage section 13, for example.

Fig. 6 shows a schematic perspective view of a second fuselage section 13 of an aircraft fuselage 10 according to a further embodiment of the invention.

The aircraft fuselage 10 can be configured substantially as the aircraft fuselage 10 of Figs. 1 and 2. In particular, the height h of the second reinforcement structure 14 varies along the circumferential direction U as illustrated in Fig. 4.

Furthermore, the second reinforcement structure 14 can comprise a grid-stiffened panel structure. For example, the grid-stiffened panel structure can be configured as an isogrid structure or an anglegrid structure.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

**Reference list**

| | |
|---|---|
| 1 | aircraft |
| 2 | substantially cylindrically shaped tank |
| 10 | aircraft fuselage |
| 11 | first fuselage section |
| 12 | first reinforcement structure |
| 13 | second fuselage section |
| 14 | second reinforcement structure |
| 15 | interior cavity |
| 16 | minor frame |
| 17 | major frame |
| 18 | plurality of frames |
| 19 | plurality of stringers |
| 20 | pressure bulkhead |
| h | height of the second reinforcement structure |
| h1 | height of the second reinforcement structure at the top of the aircraft fuselage |
| h2 | height of the second reinforcement structure at a lateral side of the aircraft fuselage |
| h3 | height of the second reinforcement structure at the bottom of the aircraft fuselage |
| h4 | height of the second reinforcement structure at a lateral side of the aircraft fuselage |
| Hu | height above the tank |
| Hl | height below the tank |
| H15 | interior height of the interior cavity |
| L15 | interior length of the interior cavity |
| W15 | interior width of the interior cavity |

U    circumferential direction of the aircraft fuselage
X    longitudinal direction of the aircraft fuselage
Y    transverse direction of the aircraft fuselage
Z    vertical direction of the aircraft fuselage

## Claims

1.  Aircraft fuselage (10) comprising:

    a first fuselage section (11) having a first reinforcement structure (12);
    a second fuselage section (13), which is arranged next to the first fuselage section (11) in a longitudinal direction (X) of the aircraft fuselage (10), wherein the second fuselage section (13) comprises a second reinforcement structure (14) that is configured differently to the first reinforcement structure (12).

2.  Aircraft fuselage (10) according to claim 1, wherein the second reinforcement structure (14) comprises a grid-stiffened panel structure.

3.  Aircraft fuselage (10) according to claim 1 or 2, wherein the second reinforcement structure (14) comprises a monocoque structure.

4.  Aircraft fuselage (10) according to claim 3, wherein the monocoque structure is configured as a sandwich structure, which comprises metallic and/or composite cover sheets and a truss-core, a honeycomb-core or a patterned woven basket core.

5.  Aircraft fuselage (10) according to one of the preceding claims, wherein the second reinforcement structure (14) comprises a geodetic structure with an isogrid-type structure that is made of piecewise linear segments.

6.  Aircraft fuselage (10) according to one of the preceding claims, wherein the second fuselage section (13) comprises an interior cavity (15).

7.  Aircraft fuselage (10) according to one of the preceding claims, wherein a height (h) of the second reinforcement structure (14) varies along the longitudinal direction (X) or along a circumferential direction or along both the longitudinal direction and the circumferential direction (U) of the aircraft fuselage.

8.  Aircraft fuselage (10) according to claim 7, wherein the height h increases and decreases once or twice per circulation in the circumferential direction (U) when starting at a predetermined position on the circumference.

9.  Aircraft fuselage (10) according to one of the preceding claims, wherein the second fuselage section (13) comprises at least one minor frame (16) and at least one major frame (17) for attaching a hydrogen tank (2) to the second fuselage section (13), wherein the at least one major frame (17) extends in the circumferential direction (U) and is thicker and is configured stronger than the at least one minor frame (16).

10. Aircraft fuselage (10) according to claim 9, wherein the at least one major frame (17) comprises a first major frame (17) and a second major frame (17) spaced apart from the first major frame (17), wherein the at least one minor frame (16) is arranged between the first and the second major frame (17).

11. Aircraft fuselage (10) according to one of the preceding claims, wherein the first reinforcement structure (12) comprises a plurality of frames (18), which extend along a circumferential direction (U) of the aircraft fuselage (10), and a plurality of stringers (19), which extend along the longitudinal direction (X).

12. Aircraft fuselage (10) according to one of the preceding claims, wherein the first fuselage section (11) circumferentially encloses a pressurizable compartment, which is pressurizable with an internal pressure, and wherein the second fuselage section circumferentially encloses an unpressurized compartment, which comprises an ambient pressure that is lower than the internal pressure.

13. Aircraft (1) or spacecraft, in particular passenger aircraft, comprising: an aircraft fuselage (10) according to one of the preceding claims; and at least one substantially cylindrically shaped tank (2) which is arranged inside the second fuselage section (13).

14. Aircraft (1) or spacecraft according to claim 10 and 13, wherein first major frame (17) is arranged forward of the at least one substantially cylindrically shaped tank (2) and the second major frame (17) is arranged aft of the at least one substantially cylindrically shaped tank (2), wherein the first major frame and the second major frame (17) are both configured to attach the at least one substantially cylindrically shaped tank (2).

Fig. 1

Fig. 2

Fig. 3

Fig. 4

Fig. 5

Fig. 6

Europäisches
Patentamt

European
Patent Office

Office européen
des brevets

## EUROPEAN SEARCH REPORT

**Application Number**

EP 24 17 8943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/074870 A1 (KAWASAKI HEAVY IND LTD [JP]) 4 May 2023 (2023-05-04) | 1,3,6-8, 11-14 | INV. B64C1/06 |
| Y | * paragraphs [0009] - [0032]; figures 1-11 * | 2,4,5 | B64C1/08 F17C1/00 B64D37/04 |
| X | US 2023/382550 A1 (MERTES ANTHONY [FR] ET AL) 30 November 2023 (2023-11-30) | 1,5,6,9, 10,13 | B64D37/30 |
| Y | * paragraphs [0050] - [0062], [0091] - [0098]; figures 1-10 * | 2-4 | |
| X | US 2015/336680 A1 (SCHUMACHER MARKUS [DE] ET AL) 26 November 2015 (2015-11-26) * paragraphs [0014], [0015], [0058] - [0060]; figures 1-3 * | 1,6,13 | |
| X | US 2023/339593 A1 (LÓPEZ-HERRERO ELISA ALVAREZ [DE] ET AL) 26 October 2023 (2023-10-26) * paragraphs [0045] - [0057]; figures 1-12 * | 1,6,13 | |
| | | | TECHNICAL FIELDS SEARCHED (IPC) |
| X | EP 2 774 839 B1 (AIRBUS OPERATIONS SL [ES]; AIRBUS OPERATIONS SAS [FR]) 15 June 2016 (2016-06-15) | 1,3,4, 6-8 | B64C B64D F17C |
| Y | * paragraphs [0034] - [0036]; figures 1a-22 * | 2,5 | |
| X | EP 4 112 478 A1 (AIRBUS OPERATIONS GMBH [DE]) 4 January 2023 (2023-01-04) * paragraphs [0006], [0025] - [0027], [0033]; figure 1 * | 1,6,13 | |
| X | US 2024/116650 A1 (METZNER CHRISTIAN [DE] ET AL) 11 April 2024 (2024-04-11) * paragraphs [0062] - [0087]; figures 1-11 * | 1,6,13 | |

-/--

The present search report has been drawn up for all claims

| Place of search | Date of completion of the search | Examiner |
|---|---|---|
| Munich | 11 November 2024 | Hofmann, Udo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EP 4 656 512 A1

**EUROPEAN SEARCH REPORT**

**Application Number**

EP 24 17 8943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Yefim Gordon ET AL: "Soviet X-Planes", , 31 December 2000 (2000-12-31), XP055102363, Retrieved from the Internet: URL:http://www.aerodesign.ufsc.br/ipa/03_design/aeronaves/Soviet%20X-Planes.pdf [retrieved on 2014-02-14] * page 201; figures TU -155 Internal arrangement * | 1,6,13 | |
| Y | US 2020/047867 A1 (GRIESS KENNETH H [US] ET AL) 13 February 2020 (2020-02-13) | 2,3,5 | |
| A | * paragraphs [0137], [0173]; figures 1-3,13,17 * | 1 | |
| Y | US 2014/186580 A1 (WEBER MARKUS J [DE] ET AL) 3 July 2014 (2014-07-03) | 2,3,5 | |
| A | * figure 1 * | 1 | |

TECHNICAL FIELDS
SEARCHED      (IPC)

The present search report has been drawn up for all claims

| Place of search | Date of completion of the search | Examiner |
|---|---|---|
| Munich | 11 November 2024 | Hofmann, Udo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 656 512 A1

## ANNEX TO THE EUROPEAN SEARCH REPORT
## ON EUROPEAN PATENT APPLICATION NO.

EP 24 17 8943

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2024

| Patent document cited in search report | | | Publication date | Patent family member(s) | | | Publication date |
|---|---|---|---|---|---|---|---|
| WO 2023074870 | A1 | | 04-05-2023 | EP | 4406852 | A1 | 31-07-2024 |
| | | | | JP | WO2023074870 | A1 | 04-05-2023 |
| | | | | US | 2024270401 | A1 | 15-08-2024 |
| | | | | WO | 2023074870 | A1 | 04-05-2023 |
| US 2023382550 | A1 | | 30-11-2023 | CN | 117146191 | A | 01-12-2023 |
| | | | | EP | 4286280 | A1 | 06-12-2023 |
| | | | | FR | 3135967 | A1 | 01-12-2023 |
| | | | | US | 2023382550 | A1 | 30-11-2023 |
| US 2015336680 | A1 | | 26-11-2015 | DE | 102014107316 | A1 | 26-11-2015 |
| | | | | US | 2015336680 | A1 | 26-11-2015 |
| US 2023339593 | A1 | | 26-10-2023 | CN | 116902196 | A | 20-10-2023 |
| | | | | EP | 4265525 | A1 | 25-10-2023 |
| | | | | FR | 3134799 | A1 | 27-10-2023 |
| | | | | US | 2023339593 | A1 | 26-10-2023 |
| EP 2774839 | B1 | | 15-06-2016 | CN | 104066647 | A | 24-09-2014 |
| | | | | EP | 2774839 | A2 | 10-09-2014 |
| | | | | ES | 2404946 | A2 | 29-05-2013 |
| | | | | ES | 2592633 | T3 | 30-11-2016 |
| | | | | US | 2013099057 | A1 | 25-04-2013 |
| | | | | WO | 2013057355 | A2 | 25-04-2013 |
| EP 4112478 | A1 | | 04-01-2023 | CN | 115593609 | A | 13-01-2023 |
| | | | | EP | 4112478 | A1 | 04-01-2023 |
| | | | | US | 2022411092 | A1 | 29-12-2022 |
| US 2024116650 | A1 | | 11-04-2024 | CN | 117842362 | A | 09-04-2024 |
| | | | | EP | 4349716 | A1 | 10-04-2024 |
| | | | | US | 2024116650 | A1 | 11-04-2024 |
| US 2020047867 | A1 | | 13-02-2020 | CA | 3042655 | A1 | 08-02-2020 |
| | | | | CN | 110816807 | A | 21-02-2020 |
| | | | | EP | 3608218 | A1 | 12-02-2020 |
| | | | | JP | 7401221 | B2 | 19-12-2023 |
| | | | | JP | 2020050332 | A | 02-04-2020 |
| | | | | US | 2020047867 | A1 | 13-02-2020 |
| US 2014186580 | A1 | | 03-07-2014 | DE | 102012110862 | A1 | 15-05-2014 |
| | | | | EP | 2730496 | A2 | 14-05-2014 |
| | | | | US | 2014186580 | A1 | 03-07-2014 |

EPO FORM P0459

For more details about this annex : see Official Journal of the European Patent Office, No. 12/82

**REFERENCES CITED IN THE DESCRIPTION**

**Patent documents cited in the description**

- GB 2443542 A